(19) Europäisches Patentamt
European Patent Office
Office européen des brevets

(11) Veröffentlichungsnummer: **0 095 442**
**A1**

(12) # EUROPÄISCHE PATENTANMELDUNG

(21) Anmeldenummer: **83810203.6**

(22) Anmeldetag: **11.05.83**

(51) Int. Cl.³: **C 09 B 43/38**
//C09B33/147, C08K5/23

(30) Priorität: **18.05.82 CH 3083/82**

(43) Veröffentlichungstag der Anmeldung:
**30.11.83 Patentblatt 83/48**

(84) Benannte Vertragsstaaten:
**CH DE FR GB IT LI**

(71) Anmelder: **CIBA-GEIGY AG**
**Patentabteilung Postfach**
**CH-4002 Basel(CH)**

(72) Erfinder: **Ronco, Karl, Dr.**
**In der Au 11**
**CH-4125 Riehen(CH)**

(54) **Disazopigmente, Verfahren zu deren Herstellung und Verwendung.**

(57) Disazopigmente der Formel

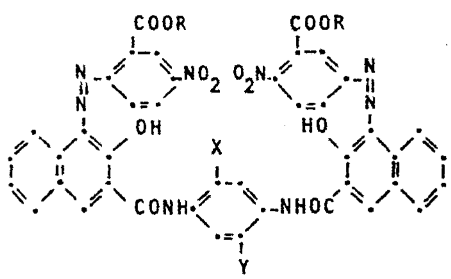

(I),

worin R $C_1$-$C_6$-Alkyl oder Cycloalkyl, X und Y H, Chlor, Methyl oder $C_{1-4}$-Alkoxy bedeuten, eignen sich zum Pigmentieren von Kunststoffen und Lacken in farbstarken braunen Tönen.

EP 0 095 442 A1

CIBA-GEIGY AG
Basel (Schweiz)

3-13923/+

# Disazopigmente, Verfahren zu deren Herstellung und Verwendung

Die Erfindung betrifft Disazopigmente der Formel

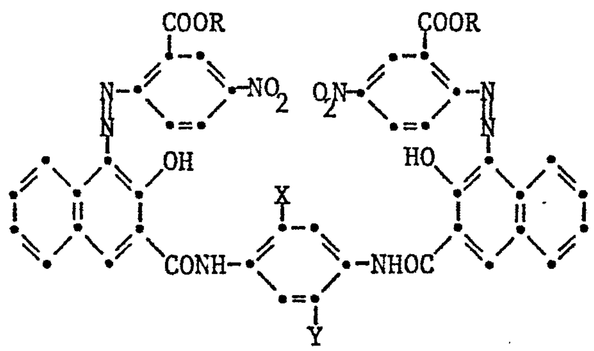

(I),

worin R $C_1$-$C_6$-Alkyl oder Cycloalkyl, X und Y H, Chlor, Methyl oder $C_1$-$C_4$-Alkoxy bedeuten.

R steht vorzugsweise für eine Aethyl- oder insbesondere Methylgruppe und kann ferner eine n-Propyl-, Isopropyl, n-Butyl-, Iso-Cyclohexylbutyl- oder Cyclohexylgruppe bedeutet.

Stehen X und Y für Alkoxygruppen, dann beispielsweise für Aethoxy-, Propoxy- oder Isopropoxygruppen, insbesondere aber Methoxygruppen. Von besonderem Interesse sind jene Pigmente, worin X und Y Methyl bedeuten.

Man erhält die Pigmente der Formel (I) vorzugsweise durch Kondensation eines Säurechlorides der Formel

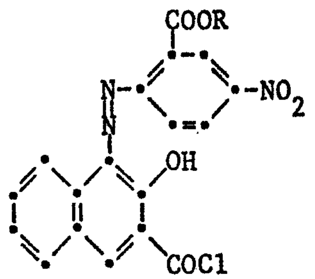

(II)

mit einem Diamin der Formel

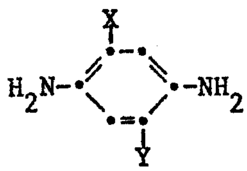

(III)

im Molverhältnis 2:1.

Die Säurechloride der Formel (II) erhält man durch Kuppeln der Diazoverbindung des Amins der Formel

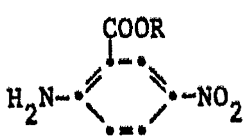

(IV)

mit 2,3-Hydroxynaphthoesäure und Behandeln der erhaltenen Azofarbstoffcarbonsäure mit säurechlorierenden Mitteln, wie Phosphortrichlorid, Phosphoroxychlorid oder insbesondere Thionylchlorid.

Als Beispiele von Amino-nitro-carbonsäureestern der Formel (IV) seien genannt:

1-Amino-4-nitrobenzol-2-carbonsäure-methylester,
1-Amino-4-nitrobenzol-2-carbonsäure-äthylester,
1-Amino-4-nitrobenzol-2-carbonsäure-n-propylester,
1-Amino-4-nitrobenzol-2-carbonsäure-isopropylester,
1-Amino-4-nitrobenzol-2-carbonsäure-n-butylester,
1-Amino-4-nitrobenzol-2-carbonsäure-isobutylester,
1-Amino-4-nitrobenzol-2-carbonsäure-cyclohexylester.

Bei diesen Diazokomponenten handelt es sich um bekannte Verbindungen.

Diazotierung und Kupplung erfolgen auf übliche Weise in wässrigem Medium. Die Behandlung mit den säurechlorierenden Mitteln wird zweckmässig in indifferenten organischen Lösungsmitteln, wie Dimethylformamid, Chlorbenzolen, z.B. Mono- oder Dichlorbenzol, Toluol, Xylol, Nitrobenzol oder höher alkylierte aromatische Kohlenwasserstoffe durchgeführt, bei den letztgenannten gegebenenfalls unter Zusatz von Dimethylformamid. Bei der Herstellung des Carbonsäurechlorides ist es zweckmässig, die in wässrigem Medium hergestellte Azoverbindung vorerst zu trocknen oder durch Kochen in einem organischen Lösungsmittel azeotrop von Wasser zu befreien. Diese azeotrope Trocknung kann gewünschtenfalls unmittelbar vor der Behandlung mit den säurehalogenierenden Mitteln vorgenommen werden.

Als Beispiele von Diaminen der Formel (III) seien erwähnt:

1,4-Phenylendiamin
2-Chlor-1,4-phenylendiamin
2-Methyl-1,4-phenylendiamin
2-Methoxy-1,4-diphenylendiamin
2,5-Dichlor-1,4-phenylendiamin
2,5-Dimethoxy-1,4-phenylendiamin
2,5-Diäthoxy-1,4-phenylendiamin
2,5-Dipropoxy-1,4-phenylendiamin
2-Chlor-5-methyl-1,4-phenylendiamin
2-Chlor-5-methoxy-1,4-phenylendiamin
2-Methyl-5-methoxy-1,4-phenylendiamin und insbesondere
2,5-Dimethyl-1,4-phenylendiamin.
1,5-Naphthylendiamin.

Die Kondensation zwischen dem Azofarbstoff-Carbonsäurechlorid und dem Diamin wird zweckmässig in wasserfreiem Medium durchgeführt. Sie erfolgt bei Temperaturen, die im Siedebereich normaler organischer Lösungsmittel wie Toluol, Monochlorbenzol, Dichlorbenzol, Trichlorbenzol, Nitrobenzol und ähnlichen liegen. Zur Beschleunigung der Umsetzung empfiehlt es sich, ein säurebindendes Mittel wie wasserfreies Natriumacetat, Pyridin oder N,N-Diäthylanilin zu verwenden. Die erhaltenen Pigmente werden in sehr guter Ausbeute und reinem Zustand erhalten. Es ist zweckmässig, die aus den Carbonsäuren erhaltenen Säurechloride vorerst abzuscheiden.

Dank ihrer Unlöslichkeit können die erhaltenen Pigmente aus den Reaktionsgemischen durch Abfiltrieren isoliert werden.

Die Pigmente der Formel (I) erhält man auch durch Kuppeln der Diazoverbindung des Amins der Formel (IV) mit dem entsprechenden 1,4-Bis-(2'-Hydroxy-3'-naphthoylamino)-benzol im Molverhältnis 2:1.

Die Kupplung wird vorzugsweise in der Weise vollzogen, dass man das zu diazotierende Amin mit der Kupplungskomponente im Molverhältnis 2:1 in einem organischen Lösungsmittel suspendiert und mit einem diazotierten Mittel, insbesondere einem Ester der salpetrigen Säure, wie Methyl-, Aethyl-, Butyl-, Amylnitrit behandelt.

Die erfindungsgemässen Pigmente können z.T. als Rohprodukte verwendet werden. Falls erwünscht, kann man jedoch die Rohprodukte durch Mahlen oder Kneten in eine feindisperse Form überführen. Dabei werden zweckmässig Mahlhilfsmittel, wie anorganische und/oder Salze in Gegenwart oder Abwesenheit organischer Lösungsmittel verwendet. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation. Auch durch Behandeln der Rohpigmente mit organischen Lösungsmitteln, vorzugsweise solchen, die über 100°C sieden, kann, wenn erwünscht, oft eine Verbesserung der Eigenschaften erreicht werden. Als besonders geeignete erweisen sich, durch Halogenatome, Alkyl- oder Nitrogruppen substituierte Benzole, wie Xylole, Chlorbenzol, o-Dichlorbenzol oder Nitrobenzol sowie Pyridinbasen, wie Pyridin, Picolin oder Chinolin,

ferner Ketone, wie Cyclohexanon, Aether, wie Aethylenglykolmonomethyl- oder monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen durchführen.

Die Nachbehandlung erfolgt vorzugsweise durch Erhitzen des Pigmentes im Wasser oder Lösungsmittel auf 100 bis 200°C, wobei in gewissen Fällen eine Kornvergröberung und gegebenenfalls eine Kristallmodifikationsumwandlung eintritt, was sich günstig auf die Licht- und Migrationsechtheit der erhaltenen Pigmente auswirkt.

Die erfindungsgemässen Pigmente eignen sich zum Pigmentieren von hochmolekularen Verbindungen, z.B. Celluloseäthern und -estern, wie Aethylcellulose, Acetylcellulose, Nitrocellulose, Polyamiden bzw. Polyurethanen oder Polyestern, natürlichen Harzen oder Kunstharzen, z.B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyäthylen, Polypropylen, Polyacrylnitril, Polyacrylsäureester, thermoplastische oder härtbare Acrylharze, Gummi, Casein, Silikon und Silikonharzen, einzeln oder in Mischungen. Die erwähnten hochmolekularen Verbindungen können als plastische Massen, Schmelzen oder in Form von Spinnlösungen, Lacken oder Druckfarben vorliegen. Je nach Verwendungszweck erweist es sich als vorteilhaft, die Pigmente als Toner oder in Form von Präparaten zu verwenden. Schliesslich können die neuen Pigmente auch als photoelektrophoretische Toner verwendet werden.

Zum Pigmentieren von Lacken und Druckfarben werden die hochmolekularen organischen Materialien und die Verbindungen der Formel (1) gegebenenfalls zusammen mit Zusatzstoffen wie Füllmitteln, anderen

Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die pigmentierten hochmolekularen organischen Materialien enthalten im allgemeinen Mengen von 0,001 bis 30 Gew.-% einer Verbindung der Formel (I), bezogen auf den zu pigmentierenden hochmolekularen organischen Stoff; dabei enthalten Polyplaste und Lacke vorzugsweise 0,1 bis 10 Gew.-%, Druckfarben vorzugsweise 10 - 30 Gew.-%. Die zu wählende Menge an Pigment richtet sich in erster Linie nach der gewünschten Farbstärke, ferner nach der Schichtdicke des Formlings und schliesslich gegebenenfalls auch nach dem Gehalt an Weisspigment im Polymeren.

Die erhaltenen braunen Färbungen, beispielsweise in Kunststoffen, Fasern und Lacken zeichnen sich durch sehr grosse Farbstärke und Brillanz, hohe Opazität, gute Dispergierbarkeit, gute Ueberlackier-, guten Glanz, gute rheologische Eigenschaften und gutes IR-Remissionsverhalten aus.

Gegenüber dem aus Beispiel 28 der GB-PS 1.143.727 bekannten isomeren Disazopigment zeichnen sich die erfindungsgemässen durch eine leichtere Zugänglichkeit aus.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

Beispiel 1: 19,8 Teile der Farbstoffcarbonsäure, die man durch Kuppeln von diazotiertem 1-Amino-4-nitrobenzol-2-carbonsäuremethylester mit 2,3-Hydroxynaphthoesäure erhält, werden in 120 Teilen o-Dichlorbenzol aufgeschlämmt. Dann werden 3,5 Teile Thionylchlorid und 0,1 Teile Dimethylformamid zugegeben und das Gemisch 1 Stunde auf 110°C erhitzt. Die Suspension wird bis auf 10°C abgekühlt und das ausgefallene reine Säurechlorid abfiltriert, mit Petroläther gewaschen und getrocknet.

13,5 Teile des so hergestellten Azocarbonsäurechlorids und 2,1 Teile 2,5-Dimethyl-1,4-phenylendiamin werden in 250 Teilen o-Dichlorbenzol eingerührt und auf 140-145°C erhitzt. Bei dieser Temperatur wird die Reaktionsmasse während 12 Stunden gerührt. Dann wird die Suspension heiss abfiltriert und das erhaltene Produkt nacheinander mit heissem o-Dichlorbenzol, Methanol und Wasser gewaschen und getrocknet. Man erhält 11,6 Teile des braunen, feinkristallinen Pigments der Formel (I) (R, X und Y = $CH_3$) das sich gut dispergieren lässt und PVC, Polyolefine und Lacke in braunen Tönen von ausgezeichneter Hitze-, Licht-, Wetter- und Migrationsechtheit färbt.

Die folgende Tabelle enthält weitere Pigmente, die auf dem angegebenen Weg hergestellt werden können, wenn man die Diazoverbindung der in der Kolonne I aufgeführten Amine auf 2,3-Hydroxynaphthoesäure kuppelt, die erhaltenen Azofarbstoffcarbonsäuren in ihre Säurechloride überführt und diese mit den in der Kolonne II angegebenen Diaminen im Molverhältnis 2:1 kondensiert. Kolonne III charakterisiert die Nuance der mit den Pigmenten gefärbten Polyvinylchloridfolie.

| Bsp. | I | II | III |
|---|---|---|---|
| 2 | 1-Amino-4-nitrobenzol-2-carbonsäuremethylester | 2,5-Dichlor-1,4-diaminobenzol | rotbraun |
| 3 | 1-Amino-4-nitrobenzol-2-carbonsäuremethylester | 1,4-Diaminobenzol | rotbraun |
| 4 | 1-Amino-4-nitrobenzol-2-carbonsäuremethylester | 2-Chlor-5-methoxy-1,4-diaminobenzol | braun |
| 5 | 1-Amino-4-nitrobenzol-2-carbonsäuremethylester | 2-Chlor-5-methyl-1,4-diaminobenzol | braun |
| 6 | 1-Amino-4-nitrobenzol-2-carbonsäuremethylester | 2-Chlor-1,4-diamino-benzol | braun |
| 7 | 1-Amino-4-nitrobenzol-2-carbonsäureäthylester | 2,5-Dimethyl-1,4-diaminobenzol | dunkel-braun |
| 8 | 1-Amino-4-nitrobenzol-2-carbonsäurepropylester | 2,5-Dimethyl-1,4-diaminobenzol | dunkel-braun |
| 9 | 1-Amino-4-nitrobenzol-2-carbonsäureisopropylester | 2,5-Dimethyl-1,4-diamino-benzol | dunkel-braun |
| 10 | 1-Amino-4-nitrobenzol-2-carbonsäurebutylester | 2,5-Dimethyl-1,4-diaminobenzol | dunkel-braun |

Beispiel 11: 68 g Polyvinylchlorid-Pulver (Suspensionspolymerisat), 33 g Dioctylphthalat, 2 g Dibutylzinnlaurat, 0,3 g eines Stabilisators auf Phosphatbasis und 0,7 g des nach Beispiel 1 hergestellten Pigmentes werden vermischt und auf dem 160° heissen Mischwalzwerk während 15 Minuten verarbeitet. Anschliessend wird auf dem Kalander eine Folie von 0,4 mm Dicke hergestellt. Die erhaltene braune Färbung ist hitzebeständig, licht- und wetter- und migrationsecht.

Beispiel 12: 0,2 g des nach Beispiel 1 hergestellten Pigments, 1 g Titandioxyd (Rutil) und 100 g LD-Polyäthylengranulat werden in einer Trommel gemischt und das Gemisch anschliessend auf dem Mischwalzwerk bei 130° verarbeitet. Die Masse wird heiss zu Platten verpresst oder in der Strangpresse verformt. Die erhaltenen braunen Platten zeigen eine ausgezeichnete Licht- und Wetterechtheit.

Beispiel 13: 0,1 g des nach Beispiel 1 hergestellten Pigmentes, 0,5 g Titandioxyd (Rutil) und 100 g Polypropylengranulat werden in einer Trommel gemischt und das Gemisch anschliessend auf dem Mischwalzwerk bei 190° verarbeitet, bis eine homogene gefärbte Mischung vorliegt. Die Masse wird heiss zu Platten von 1 mm verpresst. Die erhaltenen braunen Platten zeigen eine gute Licht- und Wetterechtheit.

Beispiel 14: 100 g stabilisiertes Polyvinylchlorid werden mit 1 g eines durch Salzknetung von 0,5 g Pigment mit 0,5 g eines Kopolymerisates aus 85% Polyvinylchlorid und 15% Polyvinylacetat erhaltenen Präparates gemischt und 6 Minuten bei 190° gewalzt. Das Walzgut wird manuell bewegt, bis eine gute Pigmentverteilung erzielt wird. Die Masse wird nun unter Druck bei 190-200° in der Form wieder abgekühlt. Die auf diese Weise eingefärbten braunen Platten zeichnen sich durch eine hohe Licht- und Wetterechtheit aus.

In der gleichen Weise können aufgehellte wetterechte braune Färbungen in Hart-PVC erzeugt werden, wenn der Ansatz bei gleichem doer reduziertem Buntpigmentanteil zusätzlich Titandioxyd zugefügt wird.

Beispiel 15: 10 g Titandioxyd und 2 g des nach Beispiel 1 hergestellten Pigments werden mit 88 g einer Mischung von 26,4 Kokosalkylharz, 24,0 g Melamin-Formaldehydharz (50% Festkörpergehalt), 8,8 g Aethylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120° eingebrannt, dann erhält man eine Braunlackierung, die sich bei guter Farbstärke durch eine sehr gute Ueberlackier-, Licht- und Wetterechtheit auszeichnet.

Beispiel 16: 4 Teile des fein verteilten Pigments gemäss Beispiel 1 werden in 20 Teilen Lösungsmittel der folgenden Zusammensetzung eingerührt: 50 Teile Solvesso (Gemisch aromatischer Kohlenstoffe), 15 Teile Butylacetat, 5 Teile Exkin II (Verlaufmittel auf Ketoximbasis), 25 Teile Methyl-Isobutylketon, 5 Teile Silikonöl (1% in Solvesso 150).

Nachdem die vollständige Feinverteilung erreicht ist (je nach Art des Rührens in ca. 15-60 Minuten), werden die Bindmittel zugesetzt, nämlich 48,3 Teile Baycryl L 530 (Acrylharz) (51% in Xylol/Butanol 3:1) und 23,7 Teile Maprenal TTX (Melaminharz) (55% in Butanol).

Nach kurzem Homogenisieren wird der Lack nach üblichen Methoden wie Spritzen und Tauchen oder speziell zur kontinuierlichen Beschichtung von Metallblechen im "Coil-Coating"-Verfahren appliziert und eingebrannt (Einbrennen 30 Minuten, 130°). Die erhaltenen braunen Lackierungen zeichnen sich durch sehr guten Verlauf, hohen Glanz und ausgezeichnete Feinverteilung des Pigmentes, sowie durch ausgezeichnete Wetterechtheiten aus.

Patentansprüche

1. Disazopigmente der Formel

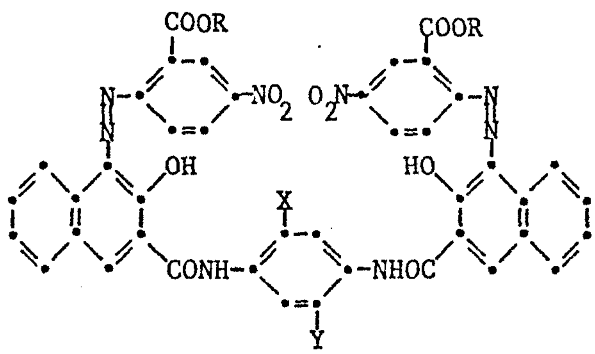

(I),

worin R $C_1$-$C_6$-Alkyl oder Cycloalkyl, X und Y H, Chlor, Methyl oder $C_1$-$C_4$-Alkoxy bedeuten.

2. Disazopigmente gemäss Anspruch 1, worin R eine Methyl- oder Aethylgruppe bedeutet.

3. Disazopigmente gemäss Anspruch 1 und 2, dadurch gekennzeichnet, dass X und Y Methylgruppen bedeuten.

4. Verfahren zur Herstellung von Disazopigmenten gemäss Anspruch 1, dadurch gekennzeichnet, dass man ein Säurechlorid der Formel

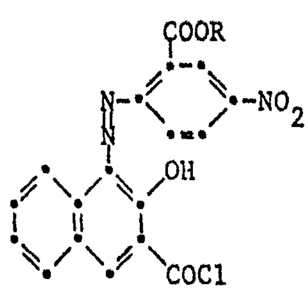

(II)

mit einem Diamin der Formel

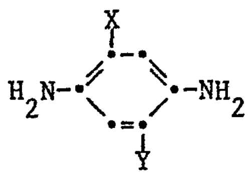

(III)

im Molverhältnis 2:1 kondensiert.

5. Verfahren gemäss Anspruch 7, dadurch gekennzeichnet, dass man von einem Säurechlorid der Formel (II) ausgeht, worin R Methyl oder Aethyl bedeutet.

6. Verfahren gemäss Anspruch 4, dadurch gekennzeichnet, dass man von einem Diamin der Formel

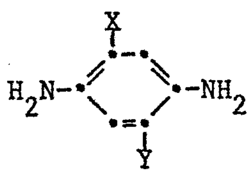

(III)

ausgeht, worin X und Y Methyl bedeuten.

7. Verfahren zum Färben von hochmolekularem organischem Material, gekennzeichnet durch die Verwendung der Pigmente gemäss Anspruch 1.

8. Hochmolekulares organisches Material enthaltend ein Pigment gemäss Anspruch 1.

Europäisches Patentamt

**EUROPÄISCHER RECHERCHENBERICHT**

**0095442**
Nummer der Anmeldung

EP 83 81 0203

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | EP-A-0 025 473 (BASF)<br>* Seiten 1-3, ganz *<br>--- | 1,4,7,8 | C 09 B 43/38 //<br>C 09 B 33/147<br>C 08 K 5/23 |
| Y | FR-A-2 164 715 (SANDOZ)<br>* Seite 1, Formel I *<br>--- | 1,4,7,8 | |
| Y | DE-A-1 644 117 (CIBA)<br>* Seiten 3,4, ganz; Seite 16, Tabelle, Beispiel 27 *<br>--- | 1,4,6-8 | |
| A | FR-A-1 189 230 (CIBA)<br>* Seite 1, linke Spalte, ganz; Seite 2, linke Spalte, Absatz 2; Seite 3, Beispiel 1 *<br>--- | 1,4,7,8 | **RECHERCHIERTE SACHGEBIETE (Int. Cl. 3)** |
| A | FR-A-1 489 672 (GEIGY)<br>* Seite 1, ganz *<br>--- | 1,4,7,8 | C 09 B 43/00<br>C 09 B 33/00 |
| A | GB-A-1 221 728 (GEIGY)<br>* Seite 1, Formel III; Seite 13, Anspruch 1 *<br>----- | 1,4,7,8 | |

Der vorliegende Recherchenbericht wurde für alle Patentansprüche erstellt.

| Recherchenort | Abschlußdatum der Recherche | Prüfer |
|---|---|---|
| DEN HAAG | 02-09-1983 | GREEN C.H. |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82